# EUROPÄISCHE PATENTSCHRIFT

(11) **EP 2 709 856 B1**
(45) Veröffentlichungstag und Bekanntmachung des Hinweises auf die Patenterteilung: **08.04.2015**
(21) Anmeldenummer: 12720885.8
(22) Anmeldetag: 15.05.2012
(51) Int. Cl.: B60D 1/07, B60D 1/30, B60D 1/52, B60R 9/06, B60D 1/173, B60D 1/34

(54) **LASTENTRÄGER**
LOAD CARRIER
PORTE-CHARGE

(30) Priorität: 18.05.2011 DE 102011050449
(43) Veröffentlichungstag der Anmeldung: 26.03.2014
(73) Patentinhaber: Lampey, Harald, 35764 Sinn (DE)
(72) Erfinder: Lampey, Harald, 35764 Sinn (DE)
(74) Vertreter: Holzwarth-Rochford, Andreas
(86) Internationale Anmeldenummer: PCT/EP2012/059001
(87) Internationale Veröffentlichungsnummer: WO 2012/156397

(56) Entgegenhaltungen:
- US-A- 3 920 266
- US-A- 4 243 243
- US-A1- 2003 123 964
- US-A1- 2007 024 024

## Beschreibung

Die vorliegende Erfindung betrifft einen Lastenträger gemäß dem Oberbegriff des Patentanspruchs 1.

Lastenträger sind beispielsweise als auf einer Anhängerkupplung eines Fahrzeugs reibschlüssig befestigbare Fahrradträger bekannt. So offenbart die DE 44 31 426 A1 einen Lastenträger in Form eines Trägers an einem Heck von Kraftfahrzeugen. Es wird vorgeschlagen, dass, für eine einfache und sichere Ausbildung eines Trägers am Heck von Kraftfahrzeugen, der eine trägerseitige Halterung zur Befestigung des Trägers an einer Anhängerkupplung sowie einen mit der trägerseitigen Halterung verbundenen nach oben ragenden Trägermast zur Befestigung mehrerer Fahrräder umfasst, der Trägermast eine das Nummernschild zumindest teilweise umschließende, in Fahrzeugquerrichtung abgekröpfte Form aufweist. Nachteilig bei diesen Lastenträgern ist jedoch, dass die auf den Lastenträger aufbringbare Last durch die zulässige Stützlast der Anhängerkupplung begrenzt ist. So liegt die Stützlast üblicherweise bei 75,85 oder 90 kg, so dass Lasten mit einem größeren Gewicht mittels derartiger Träger nicht transportierbar sind.

Bei vielen Fahrzeugen besteht darüber hinaus die Problematik, dass bei insbesondere kleineren Fahrzeugen ein zulässiges Gesamtgewicht schnell überschritten wird, wenn mehrere Personen zusammen mit ihrem Gepäck transportiert werden. Eine Überschreitung des zulässigen Gesamtgewichts ist gesetzwidrig und ferner aus verschiedenen Gründen zu vermeiden, insbesondere um einen übermäßigen Verschleiß und einen erhöhten Kraftstoffverbrauch, aber auch eine Beeinträchtigung der Fahrstabilität des Fahrzeugs zu vermeiden. In derartigen Fällen ist es zum Transport schwerer Lasten daher notwendig, dass das Fahrzeug mit einem gebremsten oder ungebremsten Anhänger verbunden wird. Dies führt jedoch dazu, dass ein sogenanntes Fahrzeuggespann gebildet wird, welches es zwar einerseits ermöglicht, Lasten mit einem höheren Gewicht zu transportieren, jedoch gleichzeitig zu dem Nachteil führt, dass die zulässige Höchstgeschwindigkeit des Gespannes gesetzlich beschränkt ist, insbesondere auf 80 bzw. 100 km/h.

Hierbei ist jedoch eine höhere zulässige Geschwindigkeit von 100 km/h nur dann möglich, wenn die mittels des ungebremsten oder keinen hydraulischen Stoßdämpfer aufweisenden Anhängers beförderte Last das 0,3-fache der Masse des Zugfahrzeuges nicht überschreitet, beispielsweise bei 1300 kg des Zugfahrzeugs ist dann lediglich eine Zuladung von 390 kg möglich, was abzüglich des Eigengewichts des Anhängers zu einer Nutzlast von lediglich ungefähr 250 kg führt. Aber auch bei solchen Gespannen besteht weiterhin der Nachteil, dass für das Anhängergespann zusätzliche Versicherungen bzw. Steuern zu zahlen sind bzw. aufgrund des vergrößerten Platzbedarfs auf Fähren höhere Fährkosten zu zahlen sind bzw. auf Autobahnen eine erhöhte Maut zu zahlen ist.

Auch führt die Bildung eines Gespanns dazu, dass die Fahrzeugbeherrschung, insbesondere beim Rückwärtsfahren, erschwert wird.

Für derartige Gespanne, insbesondere zur Verbesserung der Fahreigenschaften, schlägt darüber hinaus beispielsweise die DE 80 05 600 U1, die einen Großraumlastzug mit Mittelträgerfahrgestellen und eine um Längs- und Querachsen starre Verbindung zwischen Motorwagen und Anhänger betrifft, vor, dass eine um eine Längs- und Querachsen starre Verbindung zwischen dem Motorwagen und Anhänger aus Trägern besteht, wobei die Fahrgestelle des Motorwagens und des Anhängers über zwei gegenläufig angeordnete Zuggabeln in Dreiecksform mit einer Zugöse gekoppelt werden. Ein solches Gespann unterliegt jedoch auch bereits der zuvor beschriebenen Beschränkung.

Ferner offenbart die EP 0 283 818 A1 eine Fahrzeugeinheit bestehend aus einer Zugeinheit und einer einachsigen lösbar angeschlossenen Anhängereinheit. Dabei ist die Anhängereinheit über eine starr angeordnete zug- und druckfeste Verbindungseinrichtung starr angeschlossen, wodurch verkehrstechnisch nur eine Fahrzeugeinheit gebildet wird. Ein Vorderteil der Anhängereinheit ist mindestens an zwei Punkten eines Dachrahmens der Zugeinheit abgestützt und der Schwerpunkt liegt nicht senkrecht über einer Achse der Anhängereinheit, sondern ist zu dem auf dem Dachrahmen der Zugeinheit abgestützten Vorderteil verlagert.

Nachteilig bei dieser Fahrzeugeinheit ist jedoch, dass es für die Bildung der Fahrzeugeinheit einer besonderen Abnahme durch eine technische Überwachungsorganisation, wie dem TÜV oder der DEKRA, bedarf, insbesondere die Kombination in die Fahrzeugpapiere der Zugeinheit eingetragen werden muss, wodurch eine Austauschbarkeit der Zugeinheiten, beispielsweise für eine temporäre Nutzung der Anhängereinheit, insbesondere als Miet- oder Verleiheinheiten, nicht komplikationslos möglich ist.

Darüber hinaus weist die Fahrzeugeinheit den Nachteil auf, dass durch die Anhängereinheit ein Zugang zu einem Innenraum der Zugeinheit in Form eines Kofferraums, beispielsweise über eine Heckklappe bzw. einen Kofferraumdeckel, nicht mehr möglich ist, insbesondere für einen Zugang zu diesem Innenraum die Anhängereinheit von der Zugeinheit gelöst werden muss.

Schließlich wird durch die Abstützung der Anhängereinheit auf dem Dach der Zugeinheit eine Zuladung in die Zugeinheit reduziert, da das zulässige Gesamtgewicht, also die Kraft die maximal auf die Achsen der Zugeinheit wirken darf, nicht überschritten werden darf. Auch ist die Schwerpunktlage im Bereich der Zugeinheit nicht oder nur schwer einzustellen, insbesondere nach Verbindung der Zugeinheit mit der Anhängereinheit. Durch die Schwerpunktlage werden jedoch die Stabilitäts- und Fahreigenschaften der Fahrzugeinheit entscheidend beeinflusst.

Zum Transport eines Motorrads schlägt die US 4,243,243 eine Stabilisierungshalterung vor.

Schließlich offenbart die DE 31 17 786 A1 einen gattungsgemäßen Lastenträger in Form einer Drillmaschine, die sich über Laufräder auf dem Boden abstützt. Um Beschädigungen an Säscharen der Drillmaschine bei einem Wenden eines Ackerschleppers, an dem die Drillmaschine befestigt ist, zu vermeiden, wird eine zusätzliche Schwenkvorrichtung vorgeschlagen.

Es ist daher Aufgabe der vorliegenden Erfindung, den gattungsgemäßen Lastenträger derartig weiterzuentwickeln, dass die Nachteile des Stands der Technik überwunden werden, insbesondere ein Lastenträger bereit gestellt wird, der eine Beladung ermöglicht, die über eine zulässige Stützlast des Fahrzeugs hinaus geht und gleichzeitig nicht die Nachteile eines Fahrzeugsgespanns, wie ein Radieren bei über den Lastenträger auf das Fahrzeug wirkenden Lasten, die geringer als eine zulässige Stützlast sind, mit sich bringt.

Diese Aufgabe wird erfindungsgemäß durch die kennzeichnenden Merkmale des Patentanspruchs 1 gelöst.

Die Unteransprüche 2 bis 18 beschreiben bevorzugte Ausführungsformen der Erfindung.

Ferner liefert die Erfindung einen Fahrzeugverbund gemäß dem Patentanspruch 19.

Der Erfindung liegt somit die überraschende Erkenntnis zugrunde, dass es möglich ist, die Vorteile eines gattungsgemäßen Heckträgers und eines ungebremsten PKW-Anhängers zu kombinieren, insbesondere Lasten bis zu einem Gesamtgewicht von 750 kg transportieren zu können, an Stelle einer durch die Stützlast von 75,85 bzw. 90 kg bevorzugten Last, dass verkehrstechnisch, versicherungstechnisch und steuertechnisch lediglich ein Fahrzeug vorhanden ist, insbesondere keine zusätzliche Versicherung und Steuern zu zahlen sind, eine einfache Fahrzeugbeherrschung ermöglicht wird, insbesondere auch bei Rückwärtsfahrten, im Vergleich zu einem Gespann weniger Platzbedarf vorhanden ist, insbesondere in Parkhäusern bzw. auf Parkflächen ein Stellplatz benötigt wird, und ein schleuderfreies Fahren ohne eine zusätzliche bautechnisch bedingte Geschwindigkeitsbegrenzung ermöglicht wird, indem ein Lastenträger als Anbauträger realisiert wird, der bezüglich einer Befestigungseinrichtung des Lastenträgers im Wesentlichen starr mit dem Fahrzeug verbunden wird und indem gleichzeitig eine Abstützung einer Tragstruktur des Lastenträgers, von der die entsprechende Last getragen wird, an einem Befestigungspunkt an dem Fahrzeug und über eine Zusatzachse erfolgt. Dadurch wird sichergestellt, dass die Stützlast des Fahrzeugs nicht überschritten wird, insbesondere dass der Großteil der Last über die Zusatzachse abgestützt wird, beispielsweise bis 675 Kilo, um eine Stützlast des Fahrzeugs von 75 Kilo nicht zu überschreiten. Durch die erfindungsgemäße bewegliche Befestigung der Tragstruktur an der Befestigungseinrichtung wird darüber hinaus der weitere Vorteile erreicht, dass einerseits ein Radieren der Zusatzachse in Kurvenfahrten bzw. bei Rangierfahrten mit dem Fahrzeug vermieden bzw. reduziert wird, dadurch dass die Tragstruktur und damit die mit der Tragstruktur verbundene Zusatzachse von der Oberfläche abgehoben wird, beispielsweise wenn die über den Lastenträger wirkende Last die zulässige Stützlast des Fahrzeugs nicht überschreitet. Insbesondere erfolgt dabei die Anhebung der Tragstruktur bzw. der Zusatzachse in eine Richtung, die parallel zu einer durch die Normalenrichtung der Oberfläche und der Längsrichtung des Fahrzeugs aufgespannten Ebene verläuft.

Unter einer Bewegung parallel zu einer Ebene wird im Sinne der Erfindung auch verstanden, dass die Bewegung auch innerhalb der Ebene erfolgen kann bzw. das eine parallel zu einer Ebene verlaufenden Achse auch innerhalb der Ebene verlaufen kann.

Darüber hinaus ermöglicht eine fakultative wirkende Bewegung der Tragstruktur bzw. der Zugachse um eine jeweilige Schwenkachse, die parallel zu der ersten Ebene verläuft, dass die Zusatzachse einen vorbestimmten Winkelbereich ausgelenkt werden kann, um ein Radieren der Räder der Zusatzachse, insbesondere in einem Beladungszustand, auf der Oberfläche zu vermeiden. Dazu kann vorgesehen sein, dass entweder die Tragstruktur relativ zu der Befestigungseinrichtung drehbar gelagert ist oder die Befestigungseinrichtung und die Tragstruktur fest bzw. starr miteinander verbunden sind und die Zusatzachse um eine Schwenkachse relativ zu der Tragstruktur bewegbar ist. Dabei kann insbesondere vorgesehen sein, dass diese Bewegung der Tragstruktur relativ zu der Befestigungseinrichtung bzw. der Zusatzachse relativ zu der Tragstruktur entgegen einer jeweiligen Rückstellkraft einer Rückstelleinrichtung erfolgt, wobei mittels der Rückstelleinrichtung die Tragstruktur bzw. die Zusatzachse in eine Sollposition gezwungen wird, in der die Spur der Zusatzachse der Spur des Fahrzeugs entspricht. Dabei kann vorgesehen sein, dass die Bewegung der Tragstruktur bzw. Zusatzachse durch Anschlagelemente begrenzt wird, um einerseits einer ausreichende Spurtreue bzw. Fahrstabilität sicherzustellen und andererseits einen Kontakt zwischen den Elementen des Lastenträgers und des Fahrzeugs zu vermeiden.

In besonders bevorzugten Ausführungsformen ist vorgesehen, dass der Lastenträger sich nicht nur an einem ersten Befestigungspunkt am Fahrzeug abstützt, sondern eine Mehrzahl von ersten Befestigungspunkten vorgesehen ist, insbesondere zumindest eine zweite Abstützung vorgesehen ist, wodurch eine starre bzw. verdrehfeste Verbindung zwischen dem Fahrzeug und zumindest der Befestigungseinrichtung, vorzugsweise zwischen dem Fahrzeug und der Tragstruktur, sichergestellt wird. Bevorzugte erste Befestigungspunkte sind hierbei Anhängerkupplungen, wobei auch weitere erste Befestigungspunkte in Form von Abschleppösen bzw. Abschlepphaken oder Aufnahmen für solche Abschleppösen bzw. -haken, insbesondere solche die Schraubgewinde aufweisen, vorgesehen sein können.

Weitere erste Befestigungspunkte können aber auch über verschiedenartige Anbau- bzw. Befestigungselemente bis hin zu einer Karosserieintegration, beispielsweise durch einen angepassten Heckklappenrahmen, realisiert werden. Auch kann vorgesehen sein, dass zweite Befestigungspunkte genutzt werden, über die sich der Lastenträger zwar nicht hinsichtlich seiner Last abstützt, die jedoch dazu dienen, dass die starre Verbindung zwischen der Befestigungseinrichtung und dem Fahrzeug sichergestellt wird.

So kann vorgesehen sein, dass diese zweiten Befestigungspunkte als Abstützpunkte verwendet werden, die nur temporär angebracht werden, beispielsweise durch Magnet- oder Vakuumhalter und im Wesentlichen nur für eine Druckbeanspruchung ausgelegt sind, beispielsweise ein erster Befestigungspunkt durch eine Anhängerkupplung zur Aufnahme der Zugkraft und der Abstützung der Lastaufnahmekräfte eingesetzt wird, während zumindest ein, vorzugsweise zwei, zusätzliche Abstützungen als zweite Befestigungspunkte gegen Verdrehung der Befestigungseinrichtung relativ zu dem Fahrzeug dienen.

Insbesondere dadurch, dass die Tragstruktur in eine Richtung parallel zu der ersten Ebene, insbesondere gegen die Kraft einer ersten Rückstelleinrichtung, bewegbar ist, wird einerseits die zuvor beschriebene Möglichkeit der Anhebung der Zusatzachse von der Oberfläche erreicht und andererseits sichergestellt, dass bei Fahrten durch eine Senke oder über eine Kuppe eine negative Stützlast auf das Fahrzeug bzw. eine zu hohe Stützlast auf das Fahrzeug vermieden wird. Insbesondere um eine aktive Anlenkung der Zusatzachse bzw. der Tragstruktur zu erreichen, kann vorgesehen sein, dass eine Schwenkungseinrichtung, die vorzugsweise eine Servounterstützung bereitstellt, eingesetzt wird, die beispielsweise unter Nutzung von Daten eines Lenkwinkelsensors im Fahrzeug, wie sie beispielsweise über einen ESP-Regelkreis bereitgestellt werden, eine Bewegung der Zusatzachse zur Vermeidung eines Radierens bewirkt. Für eine Reduzierung der Radierkräfte kann auch vorgesehen sein, dass die Zusatzachse relativ zu der Befestigungseinrichtung oder der Tragstruktur in Richtung des Fahrzeugs bewegt wird, so dass insbesondere bei hohen Lasten bzw. bei Schwerpunktverschiebungen sichergestellt ist, dass die maximale Stützlast am Befestigungspunkt ausgenutzt wird, um die auf der Zusatzachse wirkende Last so weit wie möglich zu reduzieren bzw. eine bestmögliche Fahrstabilität zu erzielen. Auch können zu geringe Stützlasten oder negative Stützlasten vermieden werden. So beeinflusst eine negative Stützlast aufgrund einer reduzierten Achslast die Fahreigenschaft derartig, dass ein möglicherweise schwer beherrschbares Übersteuern des Fahrzeugs auftritt.

Um zu vermeiden, dass eine Last zunächst auf die Tragstruktur bzw. eine Lastaufnahmestruktur des Lastenträgers gehoben werden muss, kann ferner vorgesehen sein, dass die Lastaufnahmestruktur relativ zu der Tragstruktur bewegbar angeordnet ist, beispielsweise um eine senkrecht zu der ersten Ebene verlaufende Schwenkachse verschwenkbar ist. Dabei kann insbesondere vorgesehen sein, dass diese Verschwenkung so erfolgt, dass eine horizontale Lage der Lastaufnahmestruktur, insbesondere eines auf der Lastaufnahmestruktur vorhandenen Lastenträgers, nicht verändert wird, beispielsweise dieser immer parallel zu der Oberfläche angeordnet ist. Dadurch kann die Lastaufnahmestruktur bis auf die Oberfläche abgesenkt werden und so wird ein leichtes Be- und Entladen des Lastenträgers ermöglicht. Hierbei kann für die Bewegung der Lastaufnahmestruktur, eine Hebel- bzw. Getriebeeinrichtungen eingesetzt werden, um dann auch die Bewegung großer Lasten in die Fahrposition von einer Beladeposition aus zu ermöglichen. Weiterhin kann vorgesehen sein, dass die Lastaufnahmestruktur so relativ zu dem Fahrzeug bzw. dem Befestigungspunkt an dem Fahrzeug angeordnet ist, dass der Zugang zu einem Innen-, Stau- bzw. Kofferraum des Fahrzeugs nicht beeinträchtigt oder freigegeben wird. Auch kann vorgesehen sein, dass die Lastaufnahmestruktur derartig bewegbar ist, dass die Lastaufnahmestruktur weggeschwenkt werden kann, um einen Zugang zu dem Stauraum bzw. dem Kofferraum zu ermöglichen. Auch kann in vorteilhaften Ausführungsformen vorgesehen sein, dass die Lastaufnahmestruktur mit dem Stauraum verbunden ist bzw. in diesen hinein reicht. Hierbei ist insbesondere vorgesehen, dass die Tragstruktur bzw. die Lastaufnahmestruktur starr mit der Befestigungseinrichtung verbunden ist, um eine Relativbewegung zwischen dem Stauraum und der Lastaufnahmestruktur zu vermeiden. So wird erreicht, dass durch den erfindungsgemäßen Lastenträger das in dem Fahrzeug vorhandene Ladevolumen weiterhin nutzbar bleibt.

Der erfindungsgemäße Lastenträger verbindet also die Eigenschaften eines klassischen, einfachen Einachsanhängers in verschiedensten Anwendungen zum Transport von Lasten, sperrigen Lasten, Motorrädern, Elektrofahrrädern oder dergleichen, mit den Vorteilen eines Heckträgers. Insbesondere im gewerblichen Bereich wird es dadurch möglich, entsprechend größere Einzelfahrzeuge durch unterschiedliche Lastenträger zu ersetzen, wobei vorgesehen sein kann, dass die jeweiligen Lastträger unterschiedlich beladen sind, beispielsweise um Handwerkern, je nach Auftrag, unterschiedliche Werkzeuge bereitzustellen oder eine Beladung des Lastenträgers unabhängig von einem Transport des Lastenträgers zu ermöglichen. Bei Kurier- und Postdiensten ist es so möglich, dass ein Lastenträger mit dem Fahrzeug verbunden wird und diese zur Auslieferung bzw. Abholung von Produkten eingesetzt wird, während ein anderer Lastenträger im Depot verbleibt um dort be- bzw. entladen zu werden.

Auch ermöglicht es der erfindungsgemäße Lastenträger die allgemeine Tendenz zu kleineren Fahrzeugen mit eingeschränktem Kofferraumvolumen ohne die damit einhergehenden Nachteile auszunutzen, da der Lastenträger nur im Bedarfsfall mit dem Fahrzeug, wenn entsprechende Lasten zu transportieren sind, verbunden werden muss. So wird, wenn keine zusätzlichen Lasten transportiert werden müssen, der Verbrauch deutlich reduziert. Auch kann der erfindungsgemäße Lastenträger zerlegbar oder zusammenklappbar ausgebildet werden. Dies ermöglicht es ihn im Stauraum des Fahrzeugs transportieren zu können, ohne die aerodynamischen Eigenschaft des Fahrzeugs zu beeinträchtigen und im Bedarfsfall diesen, insbesondere nach Zusammenbau bzw. Ausklappen sowie Befestigung an dem Fahrzeug zum Transport zusätzlicher Lasten zu verwenden.

Auch kann der Lastenträger als zusätzliche Energiespeichereinrichtung eingesetzt werden, um eine limitierte Reichweite, beispielsweise von Elektroautos, auszugleichen. So wird nur bei langen Strecken der Lastenträger mit dem Fahrzeug verbunden um so eine Reichweitenerweiterung zu erzielen, gleichzeitig kann dieser Lastenträger dann bei Kurzstrecken von dem Fahrzeug abgekoppelt werden, um eine unnötige Masse und Last, die einen zusätzlichen Energieverbrauch bewirkt, zu vermeiden.

Auch kann vorgesehen sein, dass der Lastenträger selber als alternativer Antrieb eingesetzt werden kann, beispielsweise der Lastenträger als Elektroantrieb einschließlich Batterie dient und zum Schieben eines Fahrzeugs über die Zusatzachse zum Kurzstreckenbetrieb eingesetzt wird. Weiterhin kann die Zusatzachse mit einem Generator, beispielsweise zur Energiegewinnung, insbesondere bei Bergabfahrten oder bei Verzögerungen des Fahrzeugs, verbunden werden, um einen Energiespeicher für eine Hauptantriebseinheit des Fahrzeugs, insbesondere eines Elektromotors eines Elektro- bzw. Hybridfahrzeugs, aufzuladen.

Im Bedarfsfall kann zusätzlich oder alternativ als Last auf dem Lastenträger eine Einheit zur Erzeugung von Energie, wie elektrischer oder kinetischer Energie, beispielsweise eine Brennstoffzelle oder ein Verbrennungsmotor, vorzugsweise mit einem durch diesen angetriebenen Stromerzeuger, insbesondere samt Primärenenergiespeicher, wie einem Tank für Brennstoff - z.B. Benzin oder Wasserstoff - eingesetzt werden.

Der erfindungsgemäße Lastenträger ist jedoch nicht nur auf den Einsatz in PKWs beschränkt, sondern kann auch bei Nutzfahrzeugen, also LKWs oder Wohnmobilen aber auch bei Bussen als Ersatz zu bekannten Heckträgern, die jedoch eine begrenzte Lastaufnahme aufweisen, eingesetzt werden.

Alles in allem führt der Lastenträger zu einem ökologisch sinnvollen Zusatzelement eines Fahrzeugs, da die anzustrebende Verkleinerung von Fahrzeugen unterstützt wird, und gleichzeitig eine größtmögliche Flexibilität zum Transport von Lasten bereitgestellt wird, wodurch eine Minimierung der Umweltbelastung im Individualverkehr erreicht wird.

Weitere Merkmale und Vorteile der Erfindung ergeben sich aus der nachfolgenden Beschreibung, in der bevorzugte Ausführungsformen der Erfindung anhand von schematischen Figuren erläutert sind. Dabei zeigt:
- Figur 1: eine schematische Seitendarstellung einer ersten Ausführungsform eines Lastenträgers mit einem Fahrzeug;
- Figur 2: eine schematische Ansicht des Lastenträgers der Figur 1 aus Richtung A in Figur 1;
- Figur 3: eine schematische Aufsicht auf den Lastenträger der Figur 1 aus Richtung B in Figur 1;
- Figur 4: eine schematische Seitenansicht des Lastenträgers der Figur 1 in beladenen Zustand;
- Figur 5: eine schematische Aufsicht auf eine Befestigungseinrichtung und eines Teils einer Tragstruktur einer zweiten Ausführungsform eines Lastenträgers;
- Figur 6: eine perspektivische Seitenansicht auf eine dritte Ausführungsform eines Lastenträgers gemäß der Erfindung;
- Figur 7: eine schematische Aufsicht auf eine Befestigungseinrichtung, eine Tragstruktur und ein Teil einer Zusatzachse einer vierten Ausführungsform eines Lastenträgers;
- Figur 8: eine schematische Seitenansicht auf eine fünfte Ausführungsform eines Lastenträgers;
- Figur 9a: eine schematische Seitenansicht auf eine sechste Ausführungsform eines Lastenträgers in einer Fahrposition;
- Figur 9b: eine Seitenansicht auf den Lastenträger der Figur 9a in einer Beladungsposition;
- Figur 10a: eine schematische Aufsicht auf eine siebte Ausführungsform eines Lastenträgers in einer Fahrposition; und
- Figur 10b: eine Aufsicht auf den Lastenträger der Figur 10a in einer ausgeschwenkten Beladeposition.

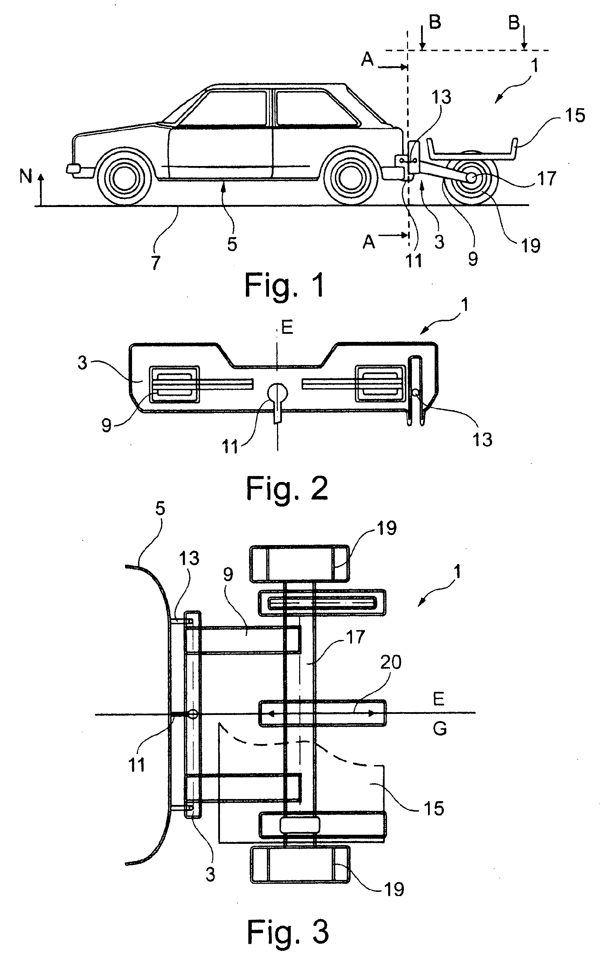

Figur 1 zeigt eine schematische Seitenansicht auf einen Lastenträger 1, welcher über eine Befestigungseinrichtung 3 mit einem Fahrzeug in Form eines Personenkraftwagens 5 verbunden ist. Das Fahrzeug 5 fährt auf einer Oberfläche in Form einer Straßendecke 7. Eine Normalenrichtung N der Straßendecke 7 spannt mit der Längsrichtung des Fahrzeugs 5 eine erste Ebene auf, die der Papierebene der Figur 1 entspricht. Der Lastenträger 1 umfasst eine Tragstruktur 9, die in der in Figur 1 dargestellten Ausführungsform starr mit der Befestigungseinrichtung 3 verbunden ist. Die Tragstruktur 9 wird über die Befestigungseinrichtung 3 über zwei erste Befestigungspunkten mit dem Personenkraftwagen 5 verbunden. Dabei werden die ersten Befestigungspunkte durch einen ersten ersten Befestigungspunkt in Form einer Anhängerkupplung 11 und einen zweiten ersten Befestigungspunkt in Form einer Abschleppöse 13 gebildet. Dabei erfolgt die Befestigung der Befestigungseinrichtung 3 derart, dass, ähnlich einer Hinterradschwinge eines Motorrads, eine Bewegung der Befestigungseinrichtung 3 bzw. der Tragstruktur 9 bzw. einer Zusatzachse 17 in der Papierebene der Figur 1 bzw. der ersten Ebene erfolgen kann, eine Bewegung senkrecht oder schräg zu der ersten Ebene jedoch nicht ermöglicht wird. Insbesondere bleibt die Befestigungseinrichtung 3 bzw. die Tragstruktur 9 spurtreu zu dem Fahrzeug 5.

Wie Figur 1 weiterhin zu entnehmen ist, ist auf der Tragstruktur 9 eine Lastenaufnahmestruktur in Form einer Wanne 15 angeordnet. Der Lastenträger 1 weist ferner eine Zusatzachse 17 auf. Diese bewirkt, dass sich eine in der Wanne 15 angeordnete Last sowohl über die Tragstruktur und die Räder 19, die auf der Zusatzachse 17 angeordnet sind, auf der Oberfläche 7 abstützt als auch über die Tragstruktur 9, die Befestigungseinrichtung 3 mittels der ersten Befestigungspunkte, insbesondere der Anhängerkupplung 11, und über das Fahrzeug 5 auf der Oberfläche 7. Hierbei ist der Lastenträger 1 derartig konzipiert, dass eine maximale Stützlast der Anhängerkupplung 11 nicht überschritten wird, so dass der Großteil der Last über die Zusatzachse 17 abgestützt wird. Obwohl in dem Ausführungsbeispiel zwei mit der Zusatzachse verbundene (Einzel)räder 19 vorgesehen sind, kann in alternativen Ausführungsformen vorgesehen sein, dass die Zusatzachse nur ein einzelnes Einzelrad aufweist oder ein Zwillingsrad bzw. Zwillingsräder vorgesehen sind.

In Figur 2 ist eine schematische Ansicht des Lastenträgers 1 aus Richtung A in Figur 1 dargestellt. Weiterhin ist in Figur 3 eine Aufsicht auf die Lastenträger 1 der Figur 1 aus Richtung B in Figur 1 dargestellt. In den Figuren 2 und 3 ist jeweils die erste Ebene E angedeutet und ferner ist in Figur 3 eine Geometrieachse G der Befestigungseinrichtung 3 dargestellt.

Aufgrund der Befestigung der Befestigungseinrichtung 3 über die ersten Befestigungspunkte in Form der Anhängerkupplung 11 und der Abschleppöse 13 an dem Fahrzeug 5 besteht eine starre Verbindung in der Art, dass die Geometrieachse G stets parallel zu der bzw. in der ersten Ebene E verläuft. Aufgrund der Tatsache, dass darüber hinaus die Befestigungseinrichtung 3 starr mit der Tragstruktur 9 verbunden ist und darüber hinaus die Zusatzachse 17 starr mit der Tragstruktur 9 verbunden ist, ist die Geometrieachse G auch die Geometrieachse der Tragstruktur 9 und der Zusatzachse 17 und somit diese Geometrieachse des gesamten Lastenträgers. Dadurch folgen die Räder 19 der Zusatzachse 17 stets der Spur der Räder des Fahrzeugs 5. Dies bewirkt, dass der Lastenträger 1 aufgrund der starren Verbindung des Lastenträgers 1 in Form eines Heckträgers lediglich als ein Fahrzeug gewertet wird und somit keiner Geschwindigkeitsbeschränkung, wie es bei einem Gespann aus einem Fahrzeug und einem Anhänger der Fall wäre, unterliegt. Ferner ist, wie durch die Pfeile 20 angedeutet, die Lastaufnahmestruktur in eine Richtung entlang der Geometrieachse G verschiebbar. Dies ermöglicht es, den Schwerpunkt der Last zu verschieben, insbesondere um die Stützlast zu optimieren bzw. die Last auf die Zusatzachse zu verändern, beispielsweise um ein Radieren der Räder 19 zu minimieren. Auch lässt sich so die Stützlast zur Optimierung der Fahrstabilität einstellen. Durch die Verschiebung der Last wird es ferner ermöglicht, einen Zugang zum Innenraum bzw. Stauraum des Fahrzeugs freizugeben, um so ein Be- und Entladen dieses Raumes zu ermöglichen.

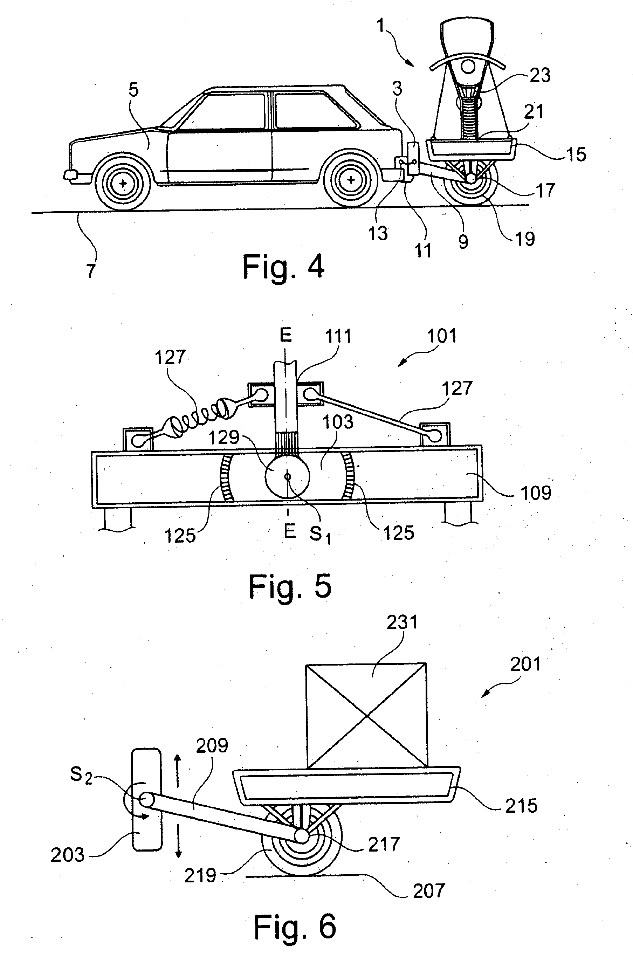

In Figur 4 ist der Lastenträger 1 der Figuren 1 bis 3 in einem beladenen Zustand dargestellt. Wie Figur 4 insbesondere zu entnehmen ist, ist in der Wanne 15 ein Fahrzeughalter in Form eines Motorradhalters, welcher eine Standschiene 21 umfasst, angeordnet und in dieser Standschiene 21 ist ein Motorrad 23 angeordnet.

Um die Fahreigenschaften des in den Figuren 1 bis 4 dargestellten Fahrzeugverbunds aus Lastenträger 1 und Fahrzeug 5, insbesondere bei Rangier- bzw. Kurvenfahrten, zu verbessern, kann neben der Schwerpunktverlagerung vorgesehen sein, dass bei derartigen Kurvenfahrten eine Bewegung der Zusatzachse 17 ermöglicht wird. Dadurch wird erreicht, dass ein Radieren eines Rads 19 auf der Oberfläche 7 bei derartigen Kurvenfahrten vermieden wird.

In Figur 5 ist eine zweite Ausführungsform eines Lastenträgers 101, der eine derartige Auslenkung der Zusatzachse erlaubt, dargestellt. Genauer ist in Figur 5 eine schematische Aufsicht auf den Lastenträger 101 dargestellt. Die Elemente des Lastenträgers 101, die denjenigen des Lastenträgers 1 entsprechen tragen die gleichen Bezugszeichen, allerdings um 100 erhöht. Im Gegensatz zu dem Lastenträger 1 ist beim Lastenträger 101 die Tragstruktur 109 nicht starr mit der Befestigungseinrichtung 103 verbunden, sondern über ein Scharnier 125 derartig gelagert, dass die Tragstruktur um eine erste Schwenkachse S₁, die parallel zu der ersten Ebene E bzw. in der ersten Ebene E verläuft, relativ zu der Befestigungseinrichtung 103 verschwenkbar ist. Dabei erfolgt die Verschwenkung der Tragstruktur 109 relativ zu der Befestigungseinrichtung 103 gegen eine Rückstellkraft, die über eine zweite Rückstelleinrichtung in Form von Federelementen 127 aufgebaut wird. Hierbei sind in die Rückstelleinrichtungen auch nicht dargestellte Anschlagelemente integriert, durch die sichergestellt wird, dass eine Verschwenkung der Tragstruktur 109 relativ zu der Befestigungseinrichtung 103 nur in einem vorbestimmten Ausmaß, insbesondere in einem Winkelbereich von -15° bis +15° erfolgt. Im Gegensatz zu dem Lastenträger 1 ist ferner bei dem Lastenträger 101 die Befestigungseinrichtung 103 lediglich an einem einzigen ersten Befestigungspunkt mit dem Fahrzeug verbunden. Hierzu ist in bekannter Weise die Befestigungseinrichtung 103 kraftschlüssig auf der Anhängerkupplung 111, insbesondere einem Kugelkopf 129, der Kupplung 111, befestigt.

In Figur 6 ist eine dritte Ausführungsform eines Lastenträgers 201 gemäß der Erfindung dargestellt. Diejenigen Elemente des Lastenträgers 201, die denjenigen des Lastenträgers 1 entsprechen, tragen die gleichen Bezugszeichen, allerdings um 200 erhöht. Im Gegensatz zu dem Lastenträger 1 ist bei dem Lastenträger 201 keine starre Verbindung zwischen der Befestigungseinrichtung 203 und der Tragstruktur 209 gegeben. So ist die Tragstruktur 209 derartig in der Befestigungseinrichtung 203 gelagert, das die Tragstruktur 209 in eine Richtung parallel zu der ersten Ebene, nämlich um eine Schwenkachse S₂, die senkrecht zu der ersten Ebene, die der Papierebene in Figur 6 entspricht, verläuft, insbesondere gesteuert und/oder geregelt, schwenkbar ist. Dabei erfolgt die Verschwenkung insbesondere in Abhängigkeit von einer auf den Lastenträger 201 wirkenden Last, einer geometrischen Ausgestaltung des Lastenträgers 201 und/oder der Last und/oder einer Schwerpunktverschiebung der Last.

Dabei erfolgt eine Verschwenkung der Tragstruktur 209 gegen eine in Figur 6 nicht dargestellte, erste Rückstelleinrichtung in Form einer Drehstabfeder. Diese Drehstabfeder bewirkt, dass in dem Fall, in dem die Last 231 nicht auf der Wanne 215 angeordnet ist, die Tragstruktur 209 in Figur 6 nach oben bewegt wird und zwar bis zu einem Anschlag gegen ein nicht dargestelltes zweites Anschlagelement. Dies bewirkt, dass die Zusatzachse 217, insbesondere die Räder 219, von der Oberfläche 207 abgehoben werden. Dies führt zu einer noch leichteren Rangierbarkeit und zu verbesserten Fahreigenschaften während einer Kurvenfahrt im unbeladenen Zustand des Lastenträgers 201. Befindet sich jedoch eine Last 231 auf dem Lastenträger 201, ist die Rückstellkraft derartig eingestellt, dass die Tragstruktur 209 solange angehoben bleibt, bis die Befestigungseinrichtung 203 eine maximal zulässige Stützlast auf den Befestigungspunkt des Fahrzeugs ausgeübt. Wird diese überschritten, kommt die Zusatzachse 217, insbesondere Räder 219, in Kontakt mit der Straßendecke 207, so dass sich die Last 231 auch über die Zusatzachse 217 auf der Straßendecke 207 abstützt, ohne dass es zu einer Überschreitung der Stützlast des Fahrzeugs kommt. Gleichzeitig wird durch die erste Rückstelleinrichtung die Entstehung einer negativen Stützlast, die zu unerwünschten Beeinträchtigungen der Fahrstabilität führen kann, vermieden. Ergänzend oder alternativ zu der ersten Rückstelleinrichtung kann ein Steuer- bzw. Regelkreis zur Veränderung der Position der Tragstruktur 209 vorgesehen sein. Basierend auf Messdaten eines entsprechenden Sensors zur Erfassung der auf die Tragstruktur bzw. den Lastenträger aufgebrachten Last kann die Position über die erste Rückstelleinrichtung bzw. einen entsprechenden, insbesondere elektrischen, pneumatischen oder hydraulischen, Aktuator verändert werden.

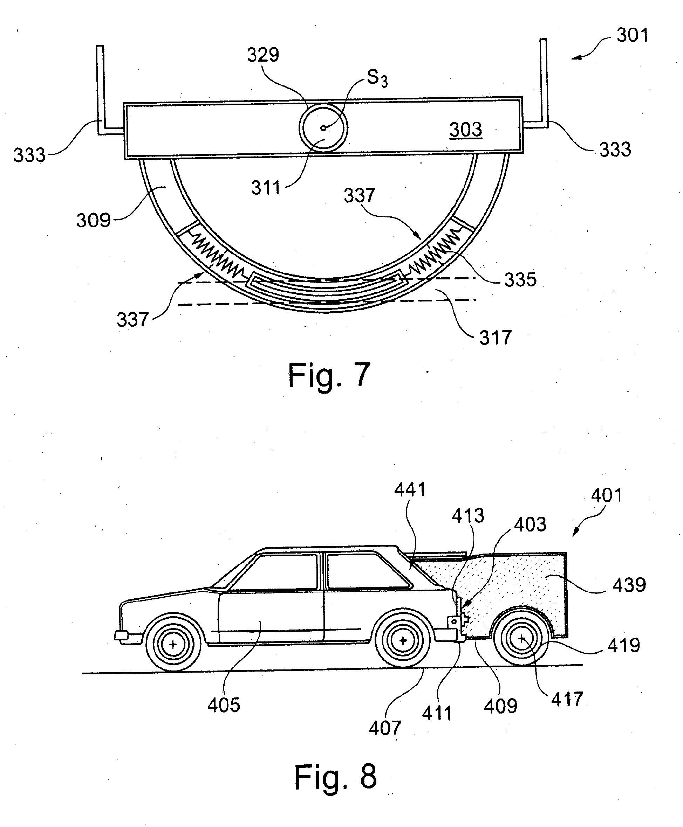

In Figur 7 ist eine vierte Ausführungsform eines Lastenträgers 301 dargestellt. Diejenigen Elemente des Lastenträgers 301, die denjenigen des Lastenträgers 1 entsprechen, tragen die gleichen Bezugszeichen, allerdings um 300 erhöht. Der Lastenträger 301 unterscheidet sich insbesondere von den Lastenträgern 1, 101 und 201 dadurch, dass die Befestigungseinrichtung 303 mittels Armen 333 an zweiten Befestigungspunkten an dem Fahrzeug befestigt ist. Die Befestigungspunkte werden insbesondere durch mittels Magnethaltern auf der Karosserie des Fahrzeugs gebildete Aufsatzpunkte für die Arme 333 gebildet. Die Befestigungseinrichtung 303 stützt sich in der vertikalen Richtung jedoch ausschließlich über den ersten Befestigungspunkt in Form der Anhängerkupplung 311 an dem Fahrzeug ab, während die Abstützung über die Arme 333 ausschließlich über eine Druckbelastung erfolgt, um eine Drehung der Befestigungseinrichtung 303 um den Kugelkopf 329 der Anhängerkupplung 311 zu vermeiden.

Darüber hinaus ist bei dem Lastenträger 301 die Tragstruktur 309 starr mit der Befestigungseinrichtung 303 verbunden. Um jedoch die Fahreigenschaften bei Kurvenfahrten bzw. Rangierfahrten dadurch zu verbessern, dass ein Radieren der Räder der Zusatzachse 317 vermieden wird, ist vorgesehen, dass die Zusatzachse 317 um eine dritte Schwenkachse S₃ verschwenkbar gelagert ist. Dabei erfolgt eine Verschwenkung der Zusatzachse 317 gegen eine Rückstellkraft, die mittels dritter Rückstelleinrichtungen in Form Druckfederelementen 335 aufgebaut wird. Dabei wird die Bewegung der Zusatzachse 317 durch Anschlagelemente 337 derartig begrenzt, dass eine maximale Auslenkung von +/- 45° erreicht wird. Im Gegensatz zum Lastenträger 101 bietet der Lastenträger 301 damit den Vorteil, dass die Zusatzachse um einen größeren Winkelbereich bewegt werden kann, insbesondere aufgrund der Tatsache, dass der Abstand zwischen Zusatzachse und Fahrzeug und damit der Bewegungsbereich bei dem Lastenträger 301 größer ist als der Bewegungsbereich der Tragstruktur 109 zum Fahrzeug.

Bei allen Lastenträgern 1, 101, 201 und 301 ist die Zusatzachse 217, 317 über eine übliche Aufhängung mit der Tragstruktur verbunden, insbesondere einer Aufhängungseinrichtung, die eine Federeinrichtung, und bevorzugt eine Stoßdämpfereinrichtung, umfasst.

Insbesondere bei dem Lastenträger 301 kann vorgesehen sein, dass die Auslenkung der Zusatzachse 317 über eine Schwenkungseinrichtung, die einen entsprechenden Aktuator, beispielsweise einen elektrischen, mechanischen, motorischen, pneumatischen und/oder hydraulischen Aktuator umfasst, gesteuert bzw. geregelt wird. Hierbei ist besonders bevorzugt, dass Lenkwinkelsignale eines ESP-Systems genutzt werden, um eine Lenkradstellung des Fahrzeugs 5 zu erkennen und so die Zusatzachse 317 entsprechend auszulenken.

Auch kann vorgesehen sein, dass die Zusatzachse 317 in eine Richtung in Figur 7 nach oben bzw. unten bewegbar ist, insbesondere in Abhängigkeit von einem Schwerpunkt einer Last auf dem Lastenträger 301. Dadurch wird zusätzlich eine Verminderung des Radiereffekts erreicht.

Auch wird so ein Rangieren im Vergleich zu einem Anhänger vereinfacht. So führt die Deichsel eines Anhängers dazu, dass bei einem Rückwärtsfahren zunächst ein gegensinniger Lenkeinschlag des Fahrzeugs notwendig ist, um den Anhänger für die rückwärtige Kurvenfahrt auszurichten. Dies ist bei dem erfindungsgemäßen Lastenträger nicht notwenig, da im Gegensatz zu einem Anhänger bei dem die Drehachse des Anhängers beabstandet von der Drehachse der Deichsel im Bereich der Anhängerkupplung ist, bei dem Lastenträger der Erfindung die Drehachse S₃ der Zusatzachse mit dem Befestigungspunkt zusammenfällt.

In Figur 8 ist eine fünfte Ausführungsform eines Lastenträgers 401 dargestellt. Diejenigen Elemente des Lastenträgers 401, die denjenigen des Lastenträgers 1 entsprechen, tragen die gleichen Bezugzeichen, allerdings um 400 erhöht. Im Gegensatz zu dem Lastenträger 1 weist der Lastenträger 401 eine Lastentragstruktur in Form eines Containers 439 auf. Der Container 439 ist derartig ausgeformt, dass er in einen Innenraum in Form eines Kofferraums 441 des Fahrzeugs 405 hineinragt. Dabei ist der Lastenträger 401 derartig konzipiert, dass die Tragstruktur 409 starr mit der Befestigungseinrichtung 403 verbunden ist, um eine Relativbewegung zwischen dem Container 439 und dem Fahrzeug 405, insbesondere dem Kofferraum 441 zu vermeiden. Auf diese Weise wird bewirkt, dass der Stauraum innerhalb des Fahrzeug 405 für einen Lastentransport nicht verloren geht, sondern über den Container 439 entweder zugänglich ist oder durch den Container 439 ausgefüllt wird.

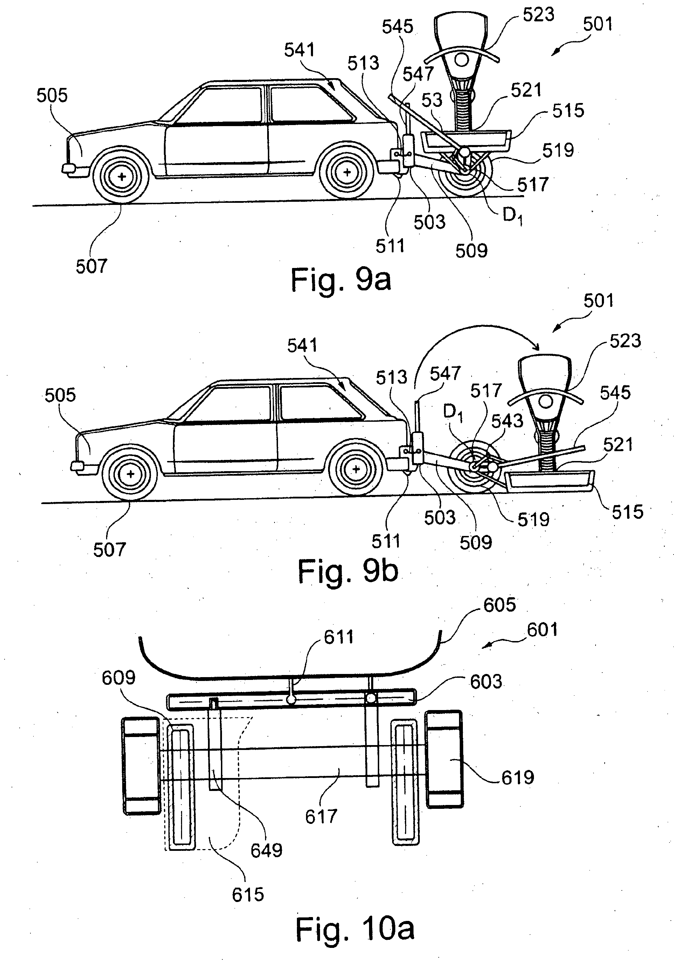

In den Figuren 9a und 9b ist eine weitere, sechste Ausführungsform eines Lastenträgers 501 dargestellt. Diejenigen Elemente des Lastenträgers 501, die denjenigen des Lastenträgers 1 entsprechen, tragen die gleichen Bezugszeichen, allerdings um 500 erhöht. Im Gegensatz zu dem Lastenträger 1 ermöglicht es der Lastenträger 501 in unterschiedliche Betriebspositionen verbracht zu werden, insbesondere in eine in Figur 9a dargestellte Fahrposition und in eine in Figur 9b dargestellte Beladungsposition. Dazu ist vorgesehen, dass die Lastaufnahmestruktur in Form der Wanne 515 und der Standschiene 521 über eine Getriebeeinrichtung 543, die eine Bewegungseinrichtung bildet, derartig um eine Drehachse D₁, die mit der Zusatzachse 517 zusammenfällt oder parallel zu dieser verläuft, verschwenkbar ist, dass, ohne eine Veränderung der horizontalen Lage, die Wanne 515 bzw. Standschiene 521 bewegbar ist und zwar über die Bewegung eines Hebels 545. In der in Figur 9b dargestellten Beladeposition lässt sich die Last in Form des Motorrades 523 einfach auf die Standschiene 521 aufbringen und über den Hebel 545 kann das Motorrad bzw. die Last dann wieder in die Fahrposition überführt, insbesondere angehoben werden. Der Hebel 545 wird dann in einer mit der Befestigungseinrichtung 503 verbundenen Lasteinrichtung 547 gesichert.

Der Lastenträger 501 weist ferner den Vorteil auf, dass neben eines einfachen Beladens und Entladens des Lastenträgers 501 durch das Überführen des Lastenträgers aus der Fahrposition in die Beladungsposition auch ein Zugang zum Fahrzeug ermöglicht wird. Das Abklappen bewirkt nämlich, dass der Kofferraum 541 des Fahrzeugs 505 zugänglich wird, insbesondere eine Heckklappe des Fahrzeugs 505 geöffnet werden kann.

Somit wird neben der Beladehilfe, insbesondere um beispielsweise ein Motorrad transportieren zu können, welches aufgrund des Gewichts nicht durch einfaches Anheben, wie ein Fahrrad, auf den Lastenträger aufgesetzt werden kann, wobei insbesondere auf eine zusätzliche Auffahrrampe verzichtet werden, einen erleichterten Zugang zum Stauraum des Fahrzeugs 505 ermöglicht. Im Gegensatz zu der in den Figuren 9a und 9b dargestellten Hebeltechnik kann auch eine mechanische, elektrische, hydraulische, pneumatische oder motorische Unterstützung über eine Winde zur Bewegung ermöglicht werden. Auch kann vorgesehen sein, dass der Hebel 545 nicht an der Befestigungseinrichtung 503, sondern an dem Fahrzeug 505 gesichert wird, wodurch eine zusätzliche Fahrstabilitätsverbesserung erreicht wird.

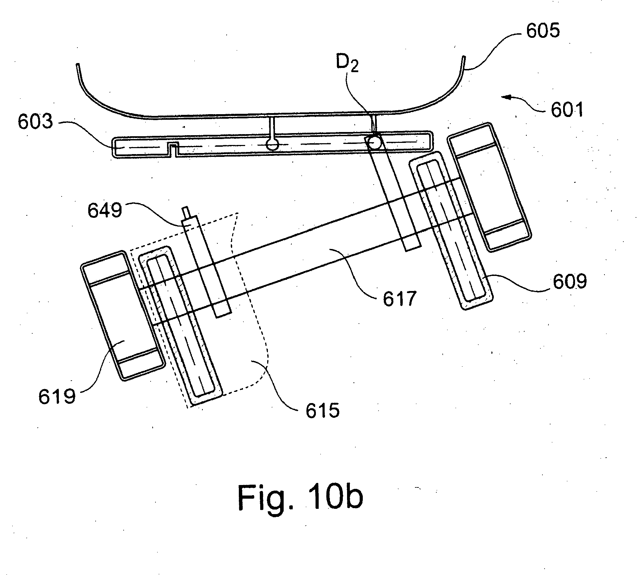

In Figuren 10a und 10b ist schließlich eine siebte Ausführungsform eines Lastenträgers 601 dargestellt. Im Gegensatz zu dem Lastenträger 1 ist jedoch die Tragstruktur 609 um eine Drehachse D₂ schwenkbar an der Befestigungseinrichtung 603 gelagert. Dies ermöglicht es, den Lastenträger 601 aus der in Figur 10a dargestellten Fahrposition in die in Figur 10b dargestellte Ladeposition zu überführen. Insbesondere wird so ermöglicht, dass ein Zugang zu dem Kofferraum des Fahrzeugs 605 ermöglicht wird, insbesondere eine Person in den Bereich zwischen der Befestigungseinrichtung 603 und der Tragstruktur 609 treten kann, um den Kofferraum zu öffnen bzw. zu be- und entladen. Über eine Sicherungseinrichtung 649 wird die Tragstruktur 609 in der in Figur 10a dargestellten Fahrposition gesichert. Bei dem Lastenträger 601 wird also durch ein seitliches Wegklappen des Lastenträgers 601 die Heckklappe des Fahrzeugs 605 zugänglich.

Die in der vorstehenden Beschreibung, in den Ansprüchen und den Zeichnungen offenbarten Merkmale können sowohl einzeln als auch in beliebiger Kombination wesentlich für die Erfindung in ihren verschiedenen Ausführungsformen sein.

### Bezugszeichen

- 1: Lastenträger
- 3: Befestigungseinrichtung
- 5: Personenkraftwagen
- 7: Straßendecke
- 9: Tragstruktur
- 11: Anhängerkupplung
- 13: Abschleppöse
- 15: Wanne
- 17: Zusatzachse
- 19: Rad
- 20: Pfeil
- 21: Standschiene
- 23: Motorrad

- 101: Lastenträger
- 103: Befestigungseinrichtung
- 109: Tragstruktur
- 111: Anhängerkupplung
- 125: Scharnier
- 127: Federelement
- 129: Kugelkopf

- 201: Lastenträger
- 203: Befestigungseinrichtung
- 207: Straßendecke
- 209: Tragstruktur
- 215: Wanne
- 217: Zusatzachse
- 219: Rad
- 231: Last

- 301: Lastenträger
- 303: Befestigungseinrichtung
- 309: Tragstruktur
- 311: Anhängerkupplung
- 317: Zusatzachse
- 329: Kugelkopf
- 333: Arm
- 335: Druckfederelement
- 337: Anschlagelement

- 401: Lastenträger
- 403: Befestigungseinrichtung
- 405: Personenkraftwagen
- 407: Straßendecke
- 409: Tragstruktur
- 411: Anhängerkupplung
- 417: Zusatzachse
- 419: Rad
- 439: Container
- 441: Kofferraum

- 501: Lastenträger
- 503: Befestigungseinrichtung
- 505: Personenkraftwagen
- 507: Straßendecke
- 509: Tragstruktur
- 511: Anhängerkupplung
- 513: Abschleppöse
- 515: Wanne
- 517: Zusatzachse
- 519: Rad
- 521: Standschiene
- 523: Motorrad
- 541: Kofferraum
- 543: Getriebeeinrichtung
- 545: Hebel
- 547: Rasteinrichtung

- 601: Lastenträger
- 603: Befestigungseinrichtung
- 605: Personenkraftwagen
- 609: Tragstruktur
- 611: Anhängerkupplung
- 613: Abschleppöse
- 615: Wanne
- 617: Zusatzachse
- 619: Rad
- 649: Sicherungseinrichtung

- A, B: Richtung
- N: Normalenrichtung
- E: Ebene
- G: Geometrieachse
- S₁, S₂, S₃, D₁, D₂: Schwenkachse

## Patentansprüche

1. Lastenträger (201) mit zumindest einer Befestigungseinrichtung (203) für ein auf einer Oberfläche (207) fahrendes Fahrzeug (5), wobei zumindest eine Tragstruktur (209) des Lastenträgers (201) mittels der Befestigungseinrichtung (203) an zumindest einem im Heckbereich des Fahrzeugs (5) angeordneten ersten Befestigungspunkt (11) mit dem Fahrzeug (5) lösbar verbindbar ist und die Befestigungseinrichtung (203) zumindest eine Geometrieachse (G) aufweist, die bei der Befestigung an dem ersten Befestigungspunkt (11) im wesentlichen starr parallel zu einer von einer Längsachse das Fahrzeugs (5) und einer Normalenrichtung (N) der Oberfläche (207) aufgespannten ersten Ebene (E) ausgerichtet ist, wobei die Tragstruktur (209) sich über die Befestigungseinrichtung (203) an dem ersten Befestigungspunkt (11) und über zumindest eine zeitweise auf der Oberfläche (207) aufliegende Zusatzachse (217) auf der Oberfläche (207) abstützt, **dadurch gekennzeichnet, dass**
die Tragstruktur (209) in eine Richtung parallel zu der ersten Ebene (E) entgegen einer Rückstellkraft, die mittels einer ersten Rückstelleinrichtung und/oder eines Aktuators aufgebaut wird, bis zu einem Kontakt mit zumindest einem ersten Anschlagelement oder bis zu einem Kontakt über die Zusatzachse (217) mit der Oberfläche (207) bewegbar mit der Befestigungseinrichtung (203) verbunden ist und/oder
zumindest eine Verschiebungseinrichtung vorgesehen ist, mittels der eine Bewegung der Zusatzachse (17) entlang der Geometrieachse (G) durchführbar ist,
wobei der Lastenträger (201) derartig ausgebildet ist, dass zur Vermeidung einer Überschreitung einer maximalen Stützlast des Fahrzeugs (5) und/oder zur Vermeidung einer negativen Stützlast die Bewegung mittels der ersten Rückstelleinrichtung und/oder des Aktuators und/oder die Bewegung mittels der Verschiebeeinrichtung in Abhängigkeit von einer auf den Lastenträger (201) wirkenden Last und/oder einer geometrische Ausgestaltung und/oder einer Schwerpunktverschiebung des Lastenträgers oder der Last durchgeführt wird.

2. Lastenträger nach Anspruch 1, **dadurch gekennzeichnet, dass**
die Tragstruktur um eine senkrecht zu der ersten Ebene (E) verlaufende zweite Schwenkachse (S2) bewegbar mit der Befestigungseinrichtung (203) verbunden ist, der Aktuator von einem Regelkreis umfasst ist und/oder eine Bewegung in Abhängigkeit von einer geometrischen Ausgestaltung und/oder einer Schwerpunktverschiebungin eine Richtung senkrecht oder parallel zu der ersten Ebene (E) durchführbar ist.

3. Lastenträger nach Anspruch 1 oder 2, **dadurch gekennzeichnet, dass**
die Tragstruktur (9), insbesondere in eine Richtung senkrecht zu der ersten Ebene (E), im wesentlichen starr mit der Befestigungseinrichtung (3) verbunden ist oder die Tragstruktur (109), vorzugsweise entgegen einer mittels zumindest einer zweiten Rückstelleinrichtung (127) aufgebauten Kraft, um eine erste Schwenkachse (S1), relativ zu der Befestigungseinrichtung (103) verschwenkbar ist, insbesondere um einen, vorzugsweise von zumindest einem zweiten Anschlagelement vorgegebenen, vorbestimmten Winkelbereich, insbesondere von -3° bis +3°, bevorzugter von -6° bis +6°, noch bevorzugter von -9° bis +9° noch mehr bevorzugt von -12° bis +12° und am bevorzugtesten von -15° bis +15°.

4. Lastenträger nach einem der vorangehenden Ansprüche, **dadurch gekennzeichnet, dass**
zumindest ein zweiter Befestigungspunkt (333) zur lösbaren Verbindung der Befestigungseinrichtung (303) oder der Tragstruktur (309) mit dem Fahrzeug vorgesehen ist, wobei vorzugsweise mittels des zweiten Befestigungspunkts im wesentlichen senkrecht zu der ersten Ebene (E) wirkende Führungskräfte aufnehmbar sind.

5. Lastenträger nach Anspruch 4, **dadurch gekennzeichnet, dass**
eine Mehrzahl von ersten Befestigungspunkten (11, 13) oder zweiten Befestigungspunkten (333) vorgesehen ist bzw. sind, wobei vorzugsweise zumindest ein erster Befestigungspunkt (311) und zumindest ein zweiter Befestigungspunkt (333), zumindest zwei erste Befestigungspunkte (11, 13) oder zumindest zwei zweite Befestigungspunkte (333) in unterschiedlichen Abständen oder spiegelsymmetrisch zu der ersten Ebene (E) angeordnet sind.

6. Lastenträger nach einem der vorangehenden Ansprüche, **dadurch gekennzeichnet, dass**
der erste Befestigungspunkt (11, 13, 311) oder der zweite Befestigungspunkt (333) innerhalb des Fahrzeugs, insbesondere eines Stauraums und/oder Kofferraums, angeordnet ist bzw. sind, zumindest bereichsweise eine, insbesondere starre, fest montierte, abnehmbare, ein- und ausfahrbare und/ oder klappbare, Anhängerkupplung (311), zumindest eine Abschleppöse (13), zumindest eine Einrichtung zur Verbindung mit einer Anhängerkupplung oder einer Abschleppöse und/oder zumindest eine mit dem Chassis oder der Karosserie, vorzugsweise lösbar, insbesondere mittels eines Magnethalters, eines Vakuumhalters, einer Rastvorrichtung und/oder einer Clipsvorrichtung, verbindbare oder aus zumindest einem Innenraum des Fahrzeugs ausfahrbare Vorrichtung umfasst.

7. Lastenträger nach einem der vorangehenden Ansprüche, **dadurch gekennzeichnet, dass**
die Befestigungseinrichtung (3) kraftschlüssig und/oder formschlüssig mit dem ersten Befestigungspunkt (11) und/oder dem zweiten Befestigungspunkt verbindbar ist, vorzugsweise mittels Reibschluss, mittels zumindest einer Kugelpfanne, mittels zumindest einer Kupplungsöse und/oder mittels zumindest eines Kupplungsauges.

8. Lastenträger nach einem der vorangehenden Ansprüche, **dadurch gekennzeichnet, dass**
die Zusatzachse (17), insbesondere in Bezug auf eine Ausrichtung zu der ersten Ebene (E), vorzugsweise senkrecht zu der ersten Ebene (E) starr mit der Befestigungseinrichtung (3) oder der Tragstruktur (9) verbunden ist oder die Zusatzachse (317), vorzugsweise entgegen einer mittels zumindest einer dritten Rückstelleinrichtung (335) aufgebauten Kraft, um eine parallel zu der ersten Ebene (E) verlaufende dritte Schwenkachse (S3), relativ zu der Befestigungseinrichtung (303) und/oder der Tragstruktur (309) verschwenkbar ist, insbesondere um einen, vorzugsweise von zumindest einem dritten Anschlagelement (337) vorgegebenen, vorbestimmten Winkelbereich, insbesondere von-5° bis +5°, bevorzugter von -10° bis +10°, noch bevorzugter von -15° bis +15°, noch mehr bevorzugt vom -20° bis +20°, weiter noch mehr bevorzugt von -25° bis +25° und am bevorzugtesten von -30° bis +30°.

9. Lastenträger nach einem der vorangehenden Ansprüche, **dadurch gekennzeichnet, dass**
zwischen Zusatzachse (17) einerseits und Befestigungseinrichtung (3) oder Tragstruktur (9) andererseits zumindest eine Aufhängungseinrichtung, insbesondere umfassend zumindest eine Federeinrichtung und/oder eine Stoßdämpfereinrichtung, angeordnet ist.

10. Lastenträger nach einem der Ansprüche 2 bis 9, **gekennzeichnet durch**
zumindest eine Schwenkungseinrichtung, wobei mittels der Schwenkungseinrichtung eine Verschwenkung der Zusatzachse (317) um die dritte Schwenkachse (S3) und/oder der Tragstruktur (109), vorzugsweise zusammen mit der starr mit der Tragstruktur (109) verbundenen Zusatzachse, um die erste Schwenkachse (S1) in Abhängigkeit von einem Steuerwinkel einer Steuereinrichtung, wie einem Lenkrad, des Fahrzeugs, einem Lenkwinkel eines.lenkbaren Rades des Fahrzeugs und/oder einer senkrecht zu der ersten Ebene (E) auf den Lastenträger (101, 301), die Befestigungseinrichtung (103, 303) und/oder Tragstruktur (109, 309) wirkende Kraft, durchführbar, insbesondere steuer- und/oder regelbar, ist.

11. Lastenträger nach einem der vorangehenden Ansprüche, **dadurch gekennzeichnet, dass**,
die Bewegung entlang der ersten Ebene steuer- und/oder regelbar ist und/oder eine Bewegung der Zusatzachse (17) in Richtung des Fahrzeugs (5) bei einer Erhöhung der Last, in Abhängigkeit von einem Abstand des Ist-Schwerpunktes von zumindest einem Soll-Schwerpunkt, insbesondere im unbelasteten Zustand des Lastenträgers (1), und/oder entgegen einer von zumindest einer vierten Rückstelleinrichtung aufgebauten Rückstellkraft durchführbar ist.

12. Lastenträger nach einem der vorangehenden Ansprüche, **gekennzeichnet durch**
zumindest eine Lastaufnahmestruktur, insbesondere umfassend zumindest eine Wanne (15), zumindest einen Container (439), zumindest einen Koffer, zumindest eine Aufnahme- und/oder Befestigungsvorrichtung für die Last, wie einen Fahrzeughalter, insbesondere Fahrradhalter und/oder Motorradhalter, einen Skihalter und/oder eine Standschiene (21).

13. Lastenträger nach Anspruch 12, **dadurch gekennzeichnet, dass**
die Lastaufnahmestruktur (15) mittels zumindest einer Bewegungsvorrichtung relativ zu der Tragstruktur (9) und/oder der Befestigungseinrichtung (3) bewegbar ist, insbesondere in eine Richtung senkrecht zu der ersten Ebene (E) verschiebbar, in eine Richtung parallel zu der ersten Ebene (E) verschiebbar, um eine Drehachse der Zusatzachse (17), um eine senkrecht zu der ersten Ebene (E) verlaufende vierte Schwenkachse (D₁) und/oder um eine parallel zu der ersten Ebene verlaufende fünfte Schwenkachse (D₂) verschwenkbar.

14. Lastenträger nach Anspruch 13, **dadurch gekennzeichnet, dass**
die Bewegungsvorrichtung zumindest eine Getriebeeinrichtung, zumindest eine Hebeleinrichtung (545), zumindest eine Verriegelungseinrichtung (547), zumindest eine fünfte Rückstelleinrichtung und/oder zumindest eine Antriebseinrichtung umfasst, wobei vorzugsweise mittels der Antriebseinrichtung eine Bewegung der Lastaufnahmestruktur (515) aus bzw. in zumindest eine Transportposition, in zumindest eine Beladeposition und/oder in zumindest eine Freigabeposition bewegbar ist und/oder die Bewegung entgegen einer durch die fünfte Rückstelleinrichtung aufgebauten Kraft erfolgt, insbesondere eine Bewegung aus der Transportposition in die Beladeposition.

15. Lastenträger nach einem der Ansprüche 12 bis 14, **dadurch gekennzeichnet, dass**
die Lastaufnahmestruktur zumindest bereichsweise in einen Stauraum des Fahrzeugs hineinreicht, die Lastaufnahmestruktur formschlüssig an eine Innenraumöffnung des Fahrzeugs ankoppelt, durch die Lastaufnahmestruktur hindurch ein Zugang zu dem Stauraum möglich ist und/oder die Lastaufnahmestruktur so angeordnet ist und/oder so bewegbar ist, dass ein Zugang zu dem Stauraum freigebbar ist, insbesondere ein Bewegungsbereich eines Verschlusses, wie einer Klappe, eines Deckels und/oder einer Tür, des Stauraums freigebbar ist und/oder die Last, die Lastaufnahmestruktur , die Zusatzachse und/oder die Tragstruktur aus dem Bewegungsbereich anordbar und/oder aus diesem herausbewegbar ist bzw. sind.

16. Lastenträger nach einem der vorangehenden Ansprüche, **dadurch gekennzeichnet, dass**
die Zusatzachse mittels zumindest einer Antriebsvorrichtung antreibbar ist, wobei vorzugsweise mittels der Tragstruktur und/oder der Lastaufnahmestruktur eine Energiespeichereinrichtung zur Bereitstellung der Energie für die Antriebsvorrichtung tragbar ist, wobei vorzugsweise die Antriebsvorrichtung mit zumindest einer Steuereinrichtung, insbesondere eines Motors, des Fahrzeugs verbindbar ist, insbesondere die Antriebsvorrichtung mittels der Steuereinrichtung steuer- und/oder regelbar ist.

17. Lastenträger nach einem der vorangehenden Ansprüche, **dadurch gekennzeichnet, dass**
die erste Rückstelleinrichtung, zweite Rückstelleinrichtung, dritte Rückstelleinrichtung, vierte Rückstelleinrichtung und/oder fünfte Rückstelleinrichtung zumindest eine Federeinrichtung, zumindest einen hydraulischen Zylinder, zumindest einen pneumatischen Zylinder, zumindest ein elektrisches Stellglied, zumindest ein motorisches Stellglied und/oder zumindest einen Stoßdämpfer zumindest teilweise umfasst bzw. umfassen.

18. Lastenträger nach einem der vorangehenden Ansprüche, **dadurch gekennzeichnet, dass**
die Schwenkungseinrichtung, die Antriebseinrichtung und/oder die Bewegungseinrichtung zumindest einen elektrischen, pneumatischen, hydraulischen und/oder magnetischen Aktuator umfasst bzw. umfassen.

19. Fahrzeugverbund umfassend ein Fahrzeug mit zumindest einem ersten Befestigungspunkt und einen mittels einer Befestigungseinrichtung mit dem ersten Befestigungspunkt verbundenen Lastenträger nach einem der vorangehenden Ansprüche.

## Claims

1. A load carrier (201) with at least one fastening device (203) for a vehicle (5) which travels on a surface (207), wherein at least one supporting structure (209) of the load carrier (201) can be releasably connected to the vehicle (5) by means of the fastening device (203) at at least one first fastening point (11) arranged in the rear region of the vehicle (5), and the fastening device (203) has at least one geometrical axis (G) which, during the fastening at the first fastening point (11), is oriented substantially rigidly parallel to a first plane (E) defined by a longitudinal axis of the vehicle (5) and a normal direction (N) of the surface (207), wherein the supporting structure (209) is supported via the fastening device (203) at the first fastening point (11) and is supported on the surface (207) via at least one additional axle (217) resting temporarily on the surface (207), **characterized in that**
the supporting structure (209) is connected to the fastening device (203) in such a way as to be movable in a direction parallel to the first plane (E) counter to a restoring force, which is built up by means of a first restoring device and/or an actuator, until it enters into contact with at least one first stop element or until it enters into contact with the surface (207) via the additional axle (217), and/or
at least one displacement device is provided, by means of which a movement of the additional axle (17) along the geometrical axis (G) can be carried out,
wherein the load carrier (201) is designed in such a way that, in order to avoid exceeding a maximum drawbar load of the vehicle (5) and/or in order to avoid a negative drawbar load, the movement is carried out by means of the first restoring device and/or by means of the actuator and/or the movement is carried out by means of the displacement device as a function of a load acting on the load carrier (201) and/or as a function of a geometrical design and/or as a function of a shift of the centre of gravity of the load carrier or of the load.

2. The load carrier according to claim 1, **characterized in that**
the supporting structure is connected to the fastening device (203) in such a way as to be movable about a second pivot axis (S2) running perpendicular to the first plane (E), the actuator is encompassed by a control loop and/or a movement can be carried out in a direction perpendicular or parallel to the first plane (E) as a function of a geometrical design and/or a shift in the centre of gravity.

3. The load carrier according to claim 1 or 2, **characterized in that**
the supporting structure (9) is connected to the fastening device (3) in a substantially rigid manner, in particular in a direction perpendicular to the first plane (E), or the supporting structure (109) is pivotable relative to the fastening device (103) about a first pivot axis (S1), preferably counter to a force built up by means of at least one second restoring device (127), in particular by a predetermined angle range that is preferably predefined by at least one second stop element, in particular from -3° to +3°, more preferably from -6° to +6°, even more preferably from -9° to +9°, yet more preferably from -12° to +12° and most preferably from -15° to +15°.

4. The load carrier according to any of the preceding claims, **characterized in that**
at least one second fastening point (333) is provided for releasably connecting the fastening device (303) or the supporting structure (309) to the vehicle, wherein guide forces acting substantially perpendicular to the first plane (E) can be absorbed preferably by means of the second fastening point.

5. The load carrier according to claim 4, **characterized in that**
a plurality of first fastening points (11, 13) or second fastening points (333) is or are provided, wherein preferably at least one first fastening point (311) and at least one second fastening point (333), at least two first fastening points (11, 13) or at least two second fastening points (333) are arranged at different distances from or in a mirror-symmetrical manner relative to the first plane (E).

6. The load carrier according to any of the preceding claims, **characterized in that**
the first fastening point (11, 13, 311) or the second fastening point (333) is or are arranged inside the vehicle, in particular inside a storage compartment and/or trunk, and/or comprises at least in one region a removable, extendable and retractable and/or foldable trailer hitch (311), which is mounted in a fixed position and/or in particular is rigid, at least one tow ring (13), at least one device for connecting to a trailer hitch or to a tow ring and/or at least one device which can be connected to the chassis or body, preferably in a detachable manner, in particular by means of a magnetic holder, a vacuum holder, a latching mechanism and/or a clip mechanism, or which can be extended out from at least one interior compartment of the vehicle.

7. The load carrier according to any of the preceding claims, **characterized in that**
the fastening device (3) can be connected to the first fastening point (11) and/or to the second fastening point in a force-fitting or form-fitting manner, preferably by means of a frictional connection, by means of at least one ball socket, by means of at least one hitch eye and/or by means of at least one ring hitch.

8. The load carrier according to any of the preceding claims, **characterized in that**
the additional axle (17) is connected to the fastening device (3) or the supporting structure (9) in a rigid manner, in particular with regard to an orientation relative to the first plane (E), preferably perpendicular to the first plane (E), or the additional axle (317) is pivotable relative to the fastening device (303) and/or the supporting structure (309) about a third pivot axis (S3) running parallel to the first plane (E), preferably counter to a force built up by means of at least one third restoring device (335), in particular by a predetermined angle range that is preferably predefined by at least one third stop element (337), in particular from 5° to +5°, more preferably from -10° to +10°, even more preferably from -15° to +15°, yet more preferably from -20° to +20°, yet more preferably still from -25° to +25° and most preferably from -30° to +30°.

9. The load carrier according to any of the preceding claims, **characterized in that**
at least one suspension device, in particular comprising at least one spring device and/or one shock absorber device, is arranged between the additional axle (17) on the one hand and the fastening device (3) or supporting structure (9) on the other hand.

10. The load carrier according to any of claims 2 to 9, **characterized by**
at least one pivoting device, wherein a pivoting of the additional axle (317) about the third pivot axis (S3) and/or of the supporting structure (109), preferably together with the additional axle rigidly connected to the supporting structure (109), about the first pivot axis (S1) can be carried out, in particular can be controlled and/or regulated, by means of the pivoting device as a function of a control angle of a control device, such as a steering wheel, of the vehicle, a steering angle of a steerable wheel of the vehicle and/or a force acting on the load carrier (101, 301), the fastening device (103, 303) and/or the supporting structure (109, 309) perpendicular to the first plane (E).

11. The load carrier according to any of the preceding claims, **characterized in that**
the movement along the first plane can be controlled and/or regulated and/or a movement of the additional axle (17) in the direction of the vehicle (5) can be carried out, in the event of an increase in the load, as a function of a distance of the actual centre of gravity from at least one target centre of gravity, in particular in the unloaded state of the load carrier (1), and/or counter to a restoring force built up by at least one fourth restoring device.

12. The load carrier according to any of the preceding claims, **characterized by**
at least one load-holding structure, in particular comprising at least one trough (15), at least one container (439), at least one trunk, at least one holding and/or fastening device for the load, such as a vehicle rack, in particular a bicycle rack and/or a motorcycle rack, a ski rack and/or a stand rail (21).

13. The load carrier according to claim 12, **characterized in that**
the load-holding structure (15) is movable relative to the supporting structure (9) and/or the fastening device (3) by means of at least one movement device, in particular is displaceable in a direction perpendicular to the first plane (E), is displaceable in a direction parallel to the first plane (E) or is pivotable about an axis of rotation of the additional axle (17), about a fourth pivot axis (D₁) running perpendicular to the first plane (E) and/or about a fifth pivot axis (D₂) running parallel to the first plane.

14. The load carrier according to claim 13, **characterized in that**
the movement device comprises at least one gear device, at least one lever device (545), at least one locking device (547), at least one fifth restoring device and/or at least one drive device, wherein, preferably by means of the drive device, a movement of the load-holding structure (515) can be moved out of and/or into at least one transport position, into at least one loading position and/or into at least one release position, and/or the movement takes place counter to a force built up by the fifth restoring device, in particular a movement from the transport position into the loading position.

15. The load carrier according to any of claims 12 to 14, **characterized in that**
at least a region of the load-holding structure extends into a storage compartment of the vehicle, the load-holding structure is coupled to an interior opening of the vehicle in a form-fitting manner, access to the storage compartment is possible through the load-holding structure and/or the load-holding structure is arranged in such a way and/or can be moved in such a way that access to the storage compartment is enabled, in particular a movement range of a closure element, such as a flap, a cover and/or a door, of the storage compartment is enabled and/or the load, the load-holding structure, the additional axle and/or the supporting structure can be arranged out of the movement range and/or can be moved out of said movement range.

16. The load carrier according to any of the preceding claims, **characterized in that**
the additional axle can be driven by means of at least one drive device, wherein an energy storage device for providing the energy for the drive device can be borne preferably by means of the supporting structure and/or the load-holding structure, wherein preferably the drive device can be connected to at least one control device, in particular an engine, of the vehicle, in particular the drive device can be controlled and/or regulated by means of the control device.

17. The load carrier according to any of the preceding claims, **characterized in that**
the first restoring device, second restoring device, third restoring device, fourth restoring device and/or fifth restoring device comprises or comprise at least partially at least one spring device, at least one hydraulic cylinder, at least one pneumatic cylinder, at least one electric actuator, at least one motor-driven actuator and/or at least one shock absorber.

18. The load carrier according to any of the preceding claims, **characterized in that**
the pivoting device, the drive device and/or the movement device comprises or comprise at least one electric, pneumatic, hydraulic and/or magnetic actuator.

19. A vehicle combination comprising a vehicle having at least one first fastening point and a load carrier according to any of the preceding claims which is connected to the first fastening point by means of a fastening device.

## Revendications

1. Porte-charge (201) comprenant au moins un dispositif de fixation (203) pour un véhicule (5) roulant sur une surface supérieure (207), au moins une structure porteuse (209) du porte-charge (201) pouvant être reliée de manière amovible au véhicule (5) en au moins un premier point de fixation (11) disposé dans la zone arrière du véhicule (5) au moyen du dispositif de fixation (203), et le dispositif de fixation (203) présentant au moins un axe géométrique (G) qui est orienté de manière pratiquement fixement parallèle à un premier plan (E) formé par un axe longitudinal du véhicule (5) et une direction normale (N) par rapport à la surface supérieure (207) lors de la fixation au premier point de fixation (11), la structure porteuse (209) s'appuyant sur la surface supérieure (207) par l'intermédiaire du dispositif de fixation (203) au niveau du premier point de fixation (11), et par l'intermédiaire d'au moins un axe supplémentaire (217) reposant temporairement sur la surface supérieure (207),
**caractérisé en ce que**
la structure porteuse (209) peut être déplacée dans une direction parallèle au premier plan (E) à l'encontre d'une force de rappel, générée au moyen d'un premier dispositif de rappel et/ou d'un actionneur, jusqu'à un contact avec au moins un premier élément de butée ou jusqu'à un contact avec la surface supérieure (207) par l'intermédiaire de l'axe supplémentaire (17), et est reliée au dispositif de fixation (63), et/ou
au moins un dispositif de déplacement est prévu, au moyen duquel un déplacement de l'axe supplémentaire (17) le long de l'axe géométrique (G) peut être effectué,
dans lequel le port-charge (201) est réalisé de manière à empêcher un dépassement d'une charge maximum du véhicule (5) et/ou à empêcher une charge négative, le déplacement au moyen du premier dispositif de rappel et/ou de l'actionneur, et/ou le déplacement au moyen du dispositif de déplacement en fonction d'une charge exercée sur le porte-charge (201), et/ou un agencement géométrique et/ou un déplacement du centre de gravité du porte-charge ou de la charge.

2. Porte-charge selon la revendication 1, **caractérisé en ce que**
la structure porteuse peut être déplacée autour d'un deuxième axe de pivotement (S2) s'étendant perpendiculairement par rapport au premier plan (E) en ayant le dispositif de fixation (203) relié à celle-ci, l'actionneur est intégré dans une boucle de réglage, et/ou un déplacement selon un agencement géométrique et/ou un déplacement de centre de gravité dans une direction perpendiculaire ou parallèle au premier plan (E) peut être effectué.

3. Porte-charge selon la revendication 1 ou 2, **caractérisé en ce que**
la structure porteuse (9), au moins dans une direction perpendiculaire au premier plan (E), est reliée de manière essentiellement rigide au dispositif de fixation (3), ou la structure porteuse (109), de préférence à l'encontre d'une force générée au moyen d'au moins un deuxième dispositif de rappel (127), peut être pivotée autour d'un premier axe de pivotement (S1) par rapport au dispositif de fixation (103), en particulier sur une zone angulaire prédéterminée, de préférence depuis un deuxième élément de butée donné, de -3° à +3°, de manière plus préférée de -6° à +6°, de manière encore plus préférée de -9° à +9°, de manière encore plus préférée de -12° à +12°, et de la manière la plus préférée de -15° à +15°.

4. Porte-charge selon l'une quelconque des revendications précédentes, **caractérisé en ce**
**qu'**au moins un deuxième point de fixation (333) est prévu, pour relier de manière amovible le dispositif de fixation (303) ou la structure porteuse (309) au véhicule, dans lequel de préférence, au moyen du deuxième point de fixation, des forces de guidage agissant essentiellement perpendiculairement par rapport au premier plan (E) peuvent être reçues.

5. Porte-charge selon la revendication 4, **caractérisé en ce**
**qu'**une multitude de premiers point de fixation (11, 13) ou de deuxièmes points de fixation (333) est ou sont prévues, de sorte que de préférence, au moins un premier point de fixation (311) et au moins un deuxième point de fixation (333), au moins deux premiers point de fixation (11, 13) ou au moins deux deuxièmes points de fixation (333) sont agencés à des distances différentes ou de manière symétrique par rapport au premier plan (E).

6. Porte-charge selon l'une quelconque des revendications précédentes, **caractérisé en ce que**
le premier point de fixation (11, 13, 311) et/ou le deuxième point de fixation (333) est ou sont agencés à l'intérieur du véhicule, en particulier dans un espace de rangement et/ou un espace de bagages, comprenant au moins un attelage de remorque (311) monté partiellement rigide, en particulier fixe, amovible, rétractable et extensible et/ou pliable, au moins un anneau de remorquage (13), au moins un système pour une liaison avec un attelage de remorque ou un anneau de remorquage, et/ou au moins un dispositif pouvant être relié au châssis ou à la carrosserie, de préférence de manière amovible, en particulier par l'intermédiaire d'un support magnétique, d'un support à vide, d'un dispositif d'encliquetage et/ou d'un dispositif à pince, ou extensible depuis au moins un espace intérieur du véhicule.

7. Porte-charge selon l'une quelconque des revendications précédentes, **caractérisé en ce que**
le dispositif de fixation (3) peut être relié au premier point de fixation (11) ou au deuxième point de fixation de manière forcée ou par agencement de forme, de préférence par l'intermédiaire d'une liaison à frottement, par l'intermédiaire d'au moins un coussinet sphérique, par l'intermédiaire d'au moins un oeillet de couplage et/ou par l'intermédiaire d'au moins une ventouse de couplage.

8. Porte-charge selon l'une quelconque des revendications précédentes, **caractérisé en ce que**
l'axe supplémentaire (17), en particulier par rapport à une direction de sortie vers le premier plan (E), de préférence perpendiculaire au premier plan (E), est relié de manière rigide au dispositif de fixation (3) et/ou à la structure porteuse (9), ou l'axe supplémentaire (317), de préférence à l'encontre d'une force générée par un troisième dispositif de rappel (335), peut pivoter autour d'un troisième axe de pivotement (S3), s'étendant parallèlement au premier plan (E), par rapport au dispositif de fixation(303) et/ou à la structure porteuse (309), en particulier sur une zone angulaire prédéterminée, de préférence depuis au moins un troisième élément de butée (337) donné, de -5° à +5°, de manière plus préférée de -10° à +10°, de manière encore plus préférée de -15° à +15°, de manière encore plus préférée de -20° à +20°, de manière encore plus préférée de -25° à +25°, et de la manière la plus préférée de -30° à +30°.

9. Porte-charge selon l'une quelconque des revendications précédentes, **caractérisé en ce**
**qu'**entre l'axe supplémentaire (17), d'une part, et le dispositif de fixation(3) et/ou la structure porteuse (9) d'autre part, est agencé au moins un système de suspension, comprenant en particulier au moins un système à ressort et/ou un système d'amortissement.

10. Porte-charge selon l'une quelconque des revendications 2 à 9, **caractérisé par**
au moins un système de pivotement, de sorte qu'au moyen du système de pivotement, un pivotement de l'axe supplémentaire (317) autour du troisième axe de pivotement (S3) et/ou de la structure porteuse (109), en ayant de préférence l'axe supplémentaire relié de manière rigide à la structure porteuse (109), autour du premier axe de pivotement (S1) en fonction d'un angle de commande d'un système de commande, comme un volant, du véhicule, d'un angle de braquage d'un volant pouvant être braqué du véhicule et/ou d'une force agissant sur le porte-charge (101, 301), le dispositif de fixation (103, 303) ou la structure porteuse (109, 309), peut être réalisée, en particulier commandée et/ou régulée perpendiculairement par rapport au premier plan (E).

11. Porte-charge selon l'une quelconque des revendications précédentes, **caractérisé en ce que**
le déplacement peut être commandé et/ou régulé le long du premier plan, et/ou un déplacement de l'axe supplémentaire (17) dans la direction du véhicule (5) peut être réalisé par l'intermédiaire d'une augmentation de la charge, en fonction d'un écart entre le premier point de pivotement et au moins un point de pivotement de consigne, en particulier dans l'état non-chargé du porte-charge (1), et à l'encontre d'une force de rappel généréé par au moins un quatrième dispositif de rappel.

12. Porte-charge selon l'une quelconque des revendications précédentes, **caractérisé par**
au moins une structure de réception de charge, comprenant en particulier au moins une cuve (15), au moins un container (439), au moins un coffre, au moins un logement et/ou au moins un dispositif de fixation pour la charge, comme un support de véhicule, en particulier un porte-vélo et/ou un porte-moto, un porte-skis et/ou un rail de transport (21).

13. Porte-charge selon la revendication 12, **caractérisé en ce que**
la structure de réception de charge (15) peut être déplacée au moyen d'au moins un dispositif de déplacement par rapport à la structure porteuse (9) et/ou au dispositif de fixation (3), en particulier peut être déplacée dans une direction perpendiculaire au premier plan (E), peut être déplacée dans une direction parallèle au premier plan (E), et peut être pivotée autour d'un axe de rotation de l'axe supplémentaire (17), autour d'un quatrième axe de pivotement (D₁) s'étendant perpendiculairement par rapport au premier plan (E), et/ou autour d'un cinquième axe de pivotement (D₂) s'étendant parallèlement par rapport au premier plan.

14. Porte-charge selon la revendication 13, **caractérisé en ce que**
le dispositif de déplacement comporte au moins un dispositif de transmission, au moins un dispositif à levier (545), au moins un dispositif de verrouillage (547), au moins un cinquième dispositif de rappel et/ou au moins un dispositif d'entraînement, dans lequel de préférence au moyen du dispositif d'entraînement, un déplacement de la structure de réception de charge (515) à l'extérieur ou à l'intérieur d'au moins une position de transport, dans au moins une position de chargement et/ou dans au moins une position de libération peut avoir lieu, et/ou le déplacement à l'encontre d'une force générée par le cinquième dispositif de rappel survient, en particulier un déplacement à l'extérieur de la position de transport jusque dans la position de chargement.

15. Porte-charge selon l'une quelconque des revendications 12 à 14, **caractérisé en ce que**
la structure de réception de charge fait saillie au moins partiellement dans l'espace de rangement du véhicule, la structure de réception de charge est couplée par agencement de forme avec une ouverture d'espace intérieur du véhicule, un accès vers l'intérieur de l'espace de rangement est possible par l'intermédiaire de la structure de réception de charge, et/ou la structure de réception de charge est agencée et/ou peut être déplacée de telle sorte qu'un accès à l'espace de rangement peut être libéré, en particulier une zone de déplacement d'une fermeture, comme une trappe, un couvercle et/ou une porte de l'espace de rangement peut être libérée, et/ou la charge, la structure de réception de charge, l'axe supplémentaire et/ou la structure porteuse peuvent être agencés à l'extérieur de la zone de déplacement, et/ou peuvent être déplacés à l'extérieur de celle-ci.

16. Porte-charge selon l'une quelconque des revendications précédentes, **caractérisé en ce que**
l'axe supplémentaire peut être entraîné au moyen d'au moins un dispositif d'entraînement, dans lequel de préférence au moyen de la structure porteuse et/ou de la structure de réception de charge, un dispositif de stockage d'énergie destiné à fournir de l'énergie au dispositif de traitement peut être supporté, dans lequel de préférence le dispositif d'entraînement peut être relié à au moins un dispositif de commande du véhicule, en particulier un moteur, le dispositif d'entraînement pouvant être commandé et/ou régulé en particulier au moyen du dispositif de commande.

17. Porte-charge selon l'une quelconque des revendications précédentes, **caractérisé en ce que**
le premier dispositif de rappel, le deuxième dispositif de rappel, le troisième dispositif de rappel, le quatrième dispositif de rappel et/ou le cinquième dispositif de rappel comportent au moins partiellement au moins un dispositif à ressort, au moins un vérin hydraulique, au moins un vérin informatique, au moins une commande électrique, au moins une commande motorisée et/ou au moins un amortisseur.

18. Porte-charge selon l'une quelconque des revendications précédentes, **caractérisé en ce que**
le dispositif de pivotement, le dispositif d'entraînement et/ou le dispositif de déplacement comprennent au moins un actionneur électrique, pneumatique, hydraulique et/ou magnétique.

19. Ensemble de véhicules comprenant un véhicule ayant au moins un premier point de fixation, et un porte-charge relié au premier point de vocation au moyen d'un dispositif de fixation, selon l'une quelconque des revendications précédentes.
